# EUROPEAN PATENT APPLICATION

(11) **EP 4 708 991 A1**
(43) Date of publication of application: **11.03.2026**
(21) Application number: 24814215.0
(22) Date of filing: 17.05.2024
(51) Int. Cl.: H04W 72/04

(54) **COMMUNICATION METHOD AND APPARATUS**

(30) Priority: 30.05.2023 CN 202310628936
(71) Applicant: Huawei Technologies Co., Ltd., Shenzhen, Guangdong 518129 (CN)
(72) Inventor: SHI, Meng, Shenzhen, Guangdong 518129 (CN); CHANG, Junren, Shenzhen, Guangdong 518129 (CN); LIAO, Shuri, Shenzhen, Guangdong 518129 (CN); DOU, Shengyue, Shenzhen, Guangdong 518129 (CN)
(74) Representative: Goddar, Heinz J.
(86) International application number: PCT/CN2024/094038
(87) International publication number: WO 2024/245016

(57) **Abstract**

This application provides a communication method and apparatus, and relates to the field of wireless communication technologies, to reduce an access delay of random access. In this application, a terminal device receives an SSB sent by a network device, where the SSB includes first resource configuration information; the terminal device receives, based on the first resource configuration information, a first SIB sent by the network device, where the first SIB includes first system information, and the first system information is information needed by the terminal device for random access; the terminal device performs random access based on the first system information, to access the network device; and the terminal device receives a second SIB sent by the network device, where the second SIB includes second system information, and the second system information is information used to perform mobility management for the terminal device. In this application, the first SIB is received based on the first resource configuration information, so that a delay in obtaining the first resource configuration information can be effectively reduced, and further, an access delay in a random access procedure can be reduced.

## Description

### CROSS-REFERENCE TO RELATED APPLICATIONS

This application claims priority to Chinese Patent Application No. 202310628936.8, filed with the China National Intellectual Property Administration on May 30, 2023 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

A random access procedure is usually a procedure from sending a random access preamble (random access preamble) (which may be referred to as a preamble for short) by a terminal to establishing a basic signaling connection between the terminal device and a network device. Currently, the network device may broadcast different synchronization signal/broadcast signal blocks (synchronization signal/physical broadcast channel blocks, SSBs) for different communication areas, and distinguish between the SSBs by using SSB indexes (indexes). Different SSB indexes represent downlink synchronization signals in different beam directions, covering and serving different areas.

After receiving SSBs, the terminal device completes timing synchronization, parses out time-frequency positions of system information blocks 1 (system information blocks 1, SIB1s) from the SSBs, receives the SIB1s based on the parsed-out time-frequency positions, parses out cell information and search space configuration information of SIB19s from the SIB1s, receives the SIB19s based on the search space configuration information of the SIB 19s, to obtain, from the SIB19s, information needed by the terminal device for random access. The terminal device performs random access based on the cell information parsed out from the SIB1s and the information that is needed by the terminal device for random access and that is obtained from the SIB19s.

Because the terminal device needs to obtain, from the SIB19s, the information needed by the terminal device for random access, and receiving of the SIB19s depends on parsing results of the SIB1s, resulting in long access delays of random access.

### SUMMARY

This application provides a communication method and apparatus, to reduce an access delay of random access.

According to a first aspect, an embodiment of this application provides a communication method. The method may be performed by a terminal device or a module (for example, a chip) used in the terminal device. An example in which the terminal device performs the method is used. The method includes: The terminal device receives an SSB sent by a network device, where the SSB includes first resource configuration information; the terminal device receives, based on the first resource configuration information, a first SIB sent by the network device, where the first SIB includes first system information, and the first system information is information needed by the terminal device for random access; the terminal device performs random access based on the first system information, to access the network device; and the terminal device receives a second SIB sent by the network device, where the second SIB includes second system information, and the second system information is information used to perform mobility management for the terminal device.

According to the foregoing method, the terminal device may parse out the first resource configuration information from the SSB, and receive the first SIB based on the first resource configuration information. This can effectively reduce a delay in obtaining the first resource configuration information, and further reduce an access delay in a random access procedure. In addition, the network device includes, in the first SIB, the information related to random access of the terminal device, for example, an ephemeris of a current satellite. After the terminal device completes random access, the network device sends the second SIB to the terminal device. The second SIB carries the information related to mobility management of the terminal. In this way, when the SIB is transmitted by using a single slot, the information related to random access of the terminal device and the information related to mobility management of the terminal are transmitted separately, so that complete transmission of the information can be ensured.

In a possible design, the terminal device receives an RRC reconfiguration message sent by the network device, where the RRC reconfiguration message includes second resource configuration information; and the terminal device receives, based on the second resource configuration information, the second SIB sent by the network device.

According to the foregoing method, after completing access, the terminal device receives the RRC reconfiguration message sent by the network device. The terminal device may obtain the second resource configuration information based on the RRC reconfiguration message. The terminal device may receive the second SIB based on the second resource configuration information, to obtain, from the second SIB, the second system information for performing mobility management for the terminal device. The terminal device performs mobility management based on the second system information, to ensure communication quality of the terminal device.

In a possible design, the terminal device receives first indication information. The first indication information includes a first type indication parameter, and the first type indication parameter indicates a SIB type of the first SIB.

According to the foregoing method, the SIB type of the first SIB sent by the network device is indicated by the first type indication parameter in the first indication information, so that the terminal device can determine, based on the first type indication parameter, that the type of the received SIB is the first SIB.

In a possible design, the terminal device receives second indication information. The second indication information includes a second type indication parameter, and the second type indication parameter indicates a SIB type of the second SIB.

According to the foregoing method, the SIB type of the second SIB sent by the network device is indicated by the second type indication parameter in the second indication information, so that the terminal device can determine, based on the second type indication parameter, that the type of the received SIB is the second SIB.

In a possible design, the first type indication parameter occupies N bits, and N is an integer greater than 1.

According to the foregoing method, when there are a plurality of SIB types, by using the multi-bit first type indication parameter, the type of the SIB sent by the network device may be flexibly indicated.

In a possible design, the second type indication parameter occupies M bits, and M is an integer greater than 1.

According to the foregoing method, when there are a plurality of SIB types, by using the multi-bit second type indication parameter, the type of the SIB sent by the network device may be flexibly indicated.

In a possible design, the first system information includes ephemeris information of the network device.

According to the foregoing method, in the random access procedure, the first system information sent by the network device includes the ephemeris information of the network device, also referred to as ephemeris information of a current satellite. The terminal device may accurately perform random access based on the received ephemeris information of the network device.

In a possible design, the second system information includes ephemeris information of a part or all of neighboring satellites corresponding to the network device.

According to the foregoing method, after random access is completed, the second system information sent by the network device includes the ephemeris information of the part or all of the neighboring satellites corresponding to the network device, and the terminal device may perform mobility management based on the ephemeris information of the neighboring satellite, to ensure communication quality of the terminal device.

According to a second aspect, an embodiment of this application provides a communication method. The method may be performed by a network device or a module (for example, a chip) used in the network device. For example, the network device performs the method. The method includes: The network device sends an SSB, where the SSB includes first resource configuration information, and the first resource configuration information indicates a resource position used to schedule a first SIB; the network device sends the first SIB, where the first SIB includes first system information, and the first system information is information needed by a terminal device for random access; and the network device sends a second SIB to the accessed terminal device, where the second SIB includes second system information, and the second system information is information used to perform mobility management for the terminal device.

In a possible design, the network device sends an RRC reconfiguration message to the accessed terminal device. The RRC reconfiguration message includes second resource configuration information, and the second resource configuration information indicates a resource position used to schedule the second SIB.

In a possible design, the network device sends first indication information. The first indication information includes a first type indication parameter, and the first type indication parameter indicates a SIB type of the first SIB.

In a possible design, the network device sends second indication information. The second indication information includes a second type indication parameter, and the second type indication parameter indicates a SIB type of the second SIB.

In a possible design, the first type indication parameter occupies N bits, and N is an integer greater than 1.

In a possible design, the second type indication parameter occupies M bits, and M is an integer greater than 1.

In a possible design, the first system information includes ephemeris information of the network device.

In a possible design, the second system information includes ephemeris information of a part or all of neighboring satellites corresponding to the network device.

According to a third aspect, this application further provides a communication apparatus. The communication apparatus has a function of implementing the method according to the first aspect or any one of the possible designs of the first aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing a corresponding function of the terminal device in the foregoing methods. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device like a network device. The interface circuit may alternatively be a transceiver. The transceiver may include a transmitter and a receiver. The transmitter and the receiver may be different components, or may be a same component that can implement different functions.

In a possible design, the communication apparatus includes corresponding functional modules, respectively configured to implement the steps in the foregoing methods. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method according to the first aspect. The details are not described herein. The communication unit (or the communication module) may alternatively be a transceiver unit (or a transceiver module). The transceiver unit may include a sending unit and a receiving unit. The sending unit and the receiving unit may be different units, or may be a same unit that can implement different functions.

The communication apparatus may be a terminal device or a chip or a chip system in the terminal device. If the communication apparatus is the terminal device, the transceiver may be a radio frequency transceiver component in the terminal device. If the communication apparatus is the chip or the chip system disposed in the terminal device, the transceiver may be a communication interface in the chip or the chip system. The communication interface is connected to a radio frequency transceiver component in the terminal device, to receive and send information via the radio frequency transceiver component.

According to a fourth aspect, this application further provides a communication apparatus. The communication apparatus has a function of implementing the method according to the second aspect or any one of the possible designs of the second aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing corresponding function of the network device in the foregoing methods. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device. The interface circuit may alternatively be a transceiver. The transceiver may include a transmitter and a receiver. The transmitter and the receiver may be different components, or may be a same component that can implement different functions.

In a possible design, the communication apparatus includes corresponding functional modules, respectively configured to implement the steps in the foregoing methods. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method according to the second aspect. The details are not described herein. The communication unit (or the communication module) may alternatively be a transceiver unit (or a transceiver module). The transceiver unit may include a sending unit and a receiving unit. The sending unit and the receiving unit may be different units, or may be a same unit that can implement different functions.

The communication apparatus may be a network device or a chip or a chip system in the network device. If the communication apparatus is the network device, the transceiver may be a radio frequency transceiver component in the network device. If the communication apparatus is the chip or the chip system disposed in the network device, the transceiver may be a communication interface in the chip or the chip system. The communication interface is connected to a radio frequency transceiver component in the network device, to receive and send information via the radio frequency transceiver component.

According to a fifth aspect, a computer-readable storage medium is provided. The computer-readable storage medium stores a computer program or instructions. When the computer program or the instructions are executed by a processor, the method according to the first aspect or any one of the possible designs of the first aspect is implemented, or the method according to the second aspect or any one of the possible designs of the second aspect is implemented.

According to a sixth aspect, a computer program product storing instructions is provided. When the instructions are run by a processor, the method according to the first aspect or any one of the possible designs of the first aspect is implemented, or the method according to the second aspect or any one of the possible designs of the second aspect is implemented.

According to a seventh aspect, a communication apparatus is provided. The communication apparatus includes a processor, and may further include a storage medium. The storage medium stores instructions. When executed by the processor, the instructions are used to implement the method according to the first aspect or any one of the possible designs of the first aspect, or implement the method according to the second aspect or any one of the possible designs of the second aspect. The communication apparatus may be a chip system. The chip system may include a chip, or may include a chip and another discrete component.

According to an eighth aspect, a communication system is provided. The communication system includes the terminal device according to the first aspect and the network device according to the second aspect.

According to a ninth aspect, this application further provides a chip, including a processor. The processor is coupled to a memory, and is configured to read and execute program instructions stored in the memory, so that the chip implements the method according to the first aspect or any one of the possible designs of the first aspect, or implements the method according to the second aspect or any one of the possible designs of the second aspect.

For each of the third aspect to the ninth aspect and technical effects that may be achieved in the aspect, refer to the descriptions of technical effects that may be achieved in the first aspect or the possible solutions of the first aspect, or in the second aspect or the possible solutions of the second aspect. Details are not described herein again.

### BRIEF DESCRIPTION OF DRAWINGS

FIG. 1 is a diagram of an architecture of a communication system according to an embodiment of this application;
FIG. 2 is a diagram of an architecture of a communication system according to an embodiment of this application;
FIG. 3 is a diagram of an architecture of a communication system according to an embodiment of this application;
FIG. 4 is a flowchart of a communication method according to an embodiment of this application;
FIG. 5 is a flowchart of a communication method according to an embodiment of this application;
FIG. 6 is a diagram of a structure of a communication apparatus according to an embodiment of this application;
FIG. 7 is a diagram of a structure of a communication apparatus according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

In this application, terms such as "first" and "second" are merely used for distinguishing between descriptions, and cannot be understood as an indication or implication of relative importance, or cannot be understood as an indication of implication of an order.

In this application, "at least one of the following" or a similar expression thereof represent any combination of listed items. For example, at least one of A, B, and/or C may represent: Only A exists, only B exists, only C exists, both A and B exist, both B and C exist, and both A and C exist, where A, B, and C may be single or multiple.

In this application, the "indication" may include a direct indication, an indirect indication, an explicit indication, and an implicit indication. When a piece of indication information is described as indicating A, it may be understood as that the indication information carries A, directly indicates A, or indirectly indicates A.

In this application, that a signal includes indication information may mean that the signal carries content of the indication information such as an information element or a field; or the signal itself may represent the indication information (for example, the signal is a sequence, different sequences represent different meanings and are used to transfer different information, and the current indication information may be represented based on the sequence that currently appears).

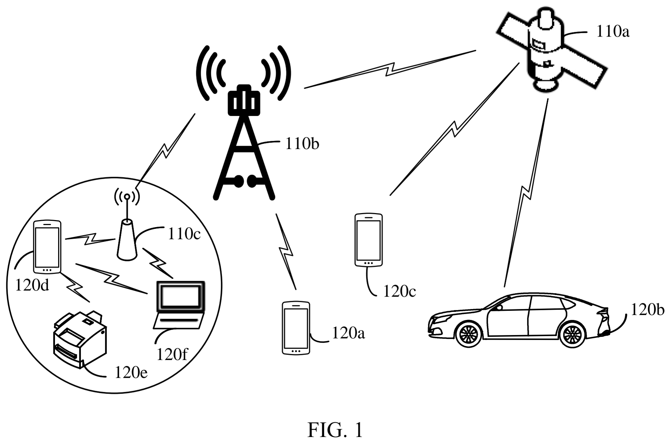

FIG. 1 shows a communication system to which an embodiment of this application is applicable. The communication system may include at least one network device (for example, 110a, 110b, and 110c in FIG. 1), and may further include at least one terminal device (for example, 120a, 120b, 120c, 120d, 120e and 120f in FIG. 1). Network devices may be connected to each other in a wired or wireless manner. FIG. 1 is merely a diagram. The communication system may further include another network device, for example, may further include a wireless relay device and a wireless backhaul device.

The communication system to which embodiments of this application are applicable may be a fifth generation (the fifth generation, 5G) mobile communication system (for example, a 5G new radio (new radio, NR) system), or may be a long term evolution (long term evolution, LTE) system, a next-generation mobile communication system, for example, a 6G mobile communication system or another similar communication system, a non-terrestrial communication network (non-terrestrial network, NTN) communication system like a satellite communication system, or another similar communication system, for example, a device-to-device (device-to-device, D2D) communication system, a sidelink (sidelink, SL) communication system, a machine-to-machine (machine to machine, M2M) communication system, a machine type communication (machine type communication, MTC) system, vehicle-to-everything (vehicle-to-everything, V2X), an uncrewed aerial vehicle (uncrewed aerial vehicle, UAV) communication system, an internet of things (internet of things, IoT) system, a narrowband internet of things (narrowband internet of things, NB-IoT) system, or the like. The IoT may be understood as wireless fidelity (wireless fidelity, Wi-Fi)-based IoT or a wearable Wi-Fi network. The wearable Wi-Fi network is a Wi-Fi network including a terminal device (for example, a mobile phone) as a virtual access point and an associated wearable device. In embodiments of this application, the 5G mobile communication system is used as an example for description. When the technical solutions in embodiments of this application are applied to another communication system, devices, components, modules, and the like in embodiments may be replaced with corresponding devices, components, and modules in the another communication system. This is not limited.

In this application, the terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, customer premise equipment (customer premise equipment, CPE), a terminal agent, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In this application, the network device is a device that is in a mobile communication system and that connects a terminal apparatus to a wireless network. As a node in a radio access network, the network device may also be referred to as a base station, a radio access network (radio access network, RAN) node (or device), an access point (access point, AP), or an access network (access network, AN) device.

Currently, some examples of the network device are as follows: a next-generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a transmission reception point (transmission reception point, TRP), a transmitting point (transmitting point, TP), a mobile switching center, a home base station (for example, a home evolved NodeB or a home NodeB, HNB), a baseband unit (baseband unit, BBU), or the like.

In some deployments, a gNB may include a central unit (central unit, CU) and a distributed unit (distributed unit, DU). The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered as being sent by the DU, or sent by the DU and the AAU. It may be understood that the network device may be a device including one or more of a CU node, a DU node, and an AAU node. In addition, the CU may be classified as a network device in a RAN, or a network device in a core network (core network, CN). This is not limited in this application.

In a possible scenario, a plurality of RAN devices (or referred to as RAN nodes) cooperatively assist a terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open-radio access network (open-radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP and the CU-UP), the DU, and the RU in this application may be implemented by using a software module, a hardware module, or a combination of a software module and a hardware module.

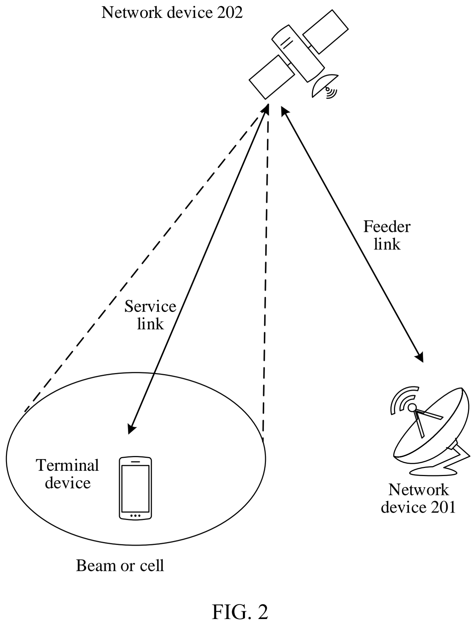

FIG. 2 shows a diagram of an architecture of an NTN communication system to which an embodiment of this application is applicable. The communication system may include a terminal device and network devices (for example, a network device 201 and a network device 202 in FIG. 2). A communication link between the network devices is a feedback link (or referred to as a feeder link) (feeder link), and a communication link between the network device and the terminal device is a service link (service link).

The network device 201 may be a gateway station (or referred to as a terrestrial station, an earth station, or a signal gateway station) (gateway), and may be configured to connect the terminal device to a core network. The network device 202 may be a satellite (or referred to as a satellite base station), a high altitude platform station (high altitude platform station, HAPS), or the like. In embodiments of this application, a communication mode of the network device 202 may include a regenerative (regenerative) mode and a transparent (transparent) transmission mode. When the communication mode of the network device 202 is the regenerative mode, the network device 202 may be used as a base station for wireless communication. For example, the network device 202 may be an artificial earth satellite, a high altitude aircraft, or the like that serves as a base station for wireless communication, to process a communication signal. When the communication mode of the network device 202 is the transparent transmission mode, the network device 201 may be used as a base station for wireless communication, and the network device 202 may be used as a relay of the base station, to perform transparent transmission of a signal between the network device 201 and the terminal device.

It should be understood that FIG. 2 shows only one network device 201 and one network device 202. During actual use, an architecture with a plurality of network devices 201 and/or one network device 202 may be used based on requirements. Each network device 202 may provide a service for one or more terminal devices, each network device 202 may correspond to one or more network devices 201, and each network device 201 may correspond to one or more network devices 202. This is not specifically limited in this application. In addition, the communication system in FIG. 2 may further include another device. For example, the communication system may also include a wireless relay device, a wireless backhaul device, and the like.

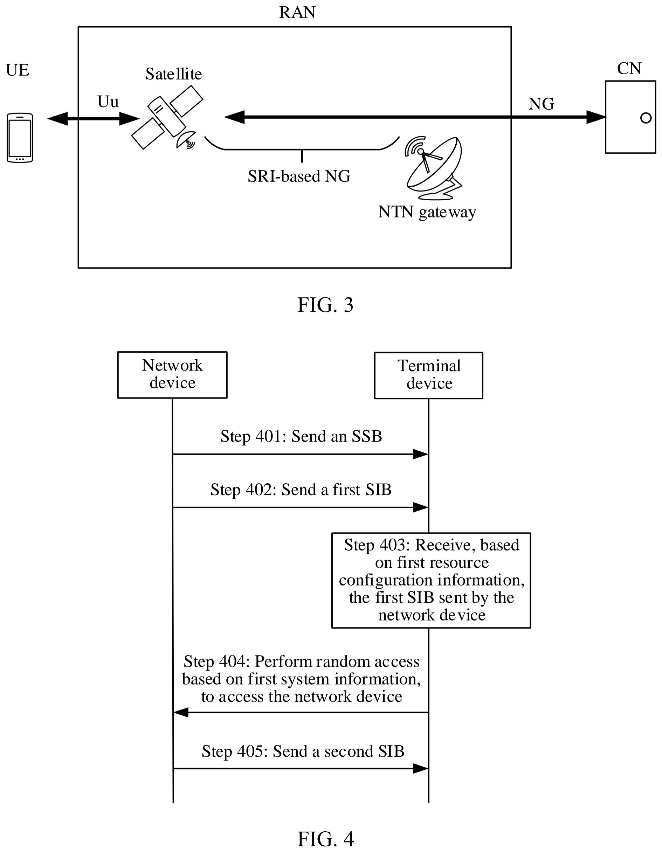

FIG. 3 is a diagram of another network architecture applicable to this application. A satellite has some or all functions of a network device, and may be referred to as a satellite base station. The satellite may provide a radio access service, and schedule a radio resource for a terminal device that accesses a network via the satellite. The satellite communicates with the terminal device through a Uu interface. The satellite may communicate with a CN through an NG interface. The satellite and the core network may exchange NAS signaling and service data of the terminal device through the NG interface. A satellite radio interface (satellite radio interface, SRI) is a feeder link between an NTN gateway and the satellite. In FIG. 3, the SRI may be used as a part of the NG interface to implement communication and exchange between the satellite and the core network.

It should be noted that the communication systems shown in FIG. 1 to FIG. 3 do not constitute limitations on the communication system to which embodiments of this application are applicable. Therefore, a method provided in embodiments of this application may be applicable to communication systems of various standards. In addition, it should be further noted that names of network elements in the communication system are not limited in embodiments of this application. For example, in communication systems of different standards, the network elements may have other names. For another example, when a plurality of network elements are integrated into a same physical device, the physical device may alternatively have another name.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In an NTN communication system, satellites are used as access network devices (for example, base stations) in the communication system, to provide communication servers for some areas such as oceans and forests. Different from a terrestrial base station, the satellite has a higher moving speed and a longer signal propagation distance, resulting in greater signal path losses of the satellite used as a base station. In the NTN communication system, each satellite (or a high altitude platform or a base station) can generally cover a large area. With given link budgets and system resources, on a satellite side, a coverage area of a single beam may be improved through beam design, to improve entire-satellite coverage. Because a coverage area of a single beam is limited, a single satellite still needs a large quantity of beams to complete full coverage. In an initial access phase, the satellite, as a network device, needs to sequentially sweep all beams, and configure random access resources for a terminal device. A random access procedure is usually a procedure from sending a random access preamble (random access preamble) (which may be referred to as a preamble for short) by a terminal device for starting attempting to access a network device to establishing a basic signaling connection between the terminal device and the network device. Currently, the network device may broadcast different SSBs for different communication areas, and distinguish between the SSBs by using SSB indexes. Generally, different SSB indexes represent downlink synchronization signals in different beam directions, covering and serving different areas. After receiving SSBs, the terminal device completes timing synchronization, parses out time-frequency positions of system information blocks 1 (system information blocks 1, SIB1s) from the SSBs, receives the SIB1s based on the parsed-out time-frequency positions, parses out cell information and search space configuration information of SIB19s from the SIB1s, receives the SIB19s based on the search space configuration information of the SIB19s, to obtain, from the SIB19s, information needed by the terminal device for random access. The terminal device performs random access based on the cell information parsed out from the SIB1s and the information that is needed by the terminal device for random access and that is obtained from the SIB19s.

Due to high-speed movement of the satellite, coverage and service time of the single satellite and each beam of the single satellite are limited. Therefore, access delays of the terminal device need to be considered, to increase access opportunities of the terminal device and ensure service coverage. In addition, because a total power of the satellite is limited, link budgets of the single beam are also limited. Using an example in which a subcarrier spacing is 30 kHz, a scheduled bandwidth is 48 RBs, a modulation and coding order is MCS0 (a code rate is 0.2344), and a quantity of symbols occupied by a PDSCH is 10, a quantity of information bits that can be transmitted in a single slot is 48 (RB)*12 (RE)*10 (symbol)*0.2344 (code rate)=1350 bits. The SIB19 occupies the single slot, and the SIB19 may carry ephemeris information, including an ephemeris of a current satellite and/or ephemeris of a neighboring satellite. Using an example in which ephemeris of the single satellite is 196 bits, 1350/196=6. In this case, the SIB19 may carry a maximum of six pieces of ephemeris information, for example, carry an ephemeris of the current satellite and ephemerides of five neighboring satellites. However, when a large quantity of neighboring satellites (for example, eight neighboring satellites) are configured for a serving satellite, complete transmission of ephemeris information cannot be implemented by using the SIB19 occupying the single slot.

In view of this, embodiments of this application provide a communication method and apparatus, to reduce a random access delay and ensure integrity of information transmission.

As shown in FIG. 4, an embodiment of this application provides a communication method. The communication method may specifically include the following steps.

Step 401: A network device sends an SSB.

Correspondingly, a terminal device receives the SSB sent by the network device.

Optionally, the SSB includes first resource configuration information. The first resource configuration information may indicate a time domain position of a search space corresponding to first scheduling information of a first SIB.

The first SIB may be one of a plurality of different types of SIBs sent by the network device.

Step 402: The network device sends the first SIB.

Optionally, the first SIB includes first system information, and the first system information may be information needed by the terminal device for random access.

The first SIB may be a SIB other than a SIB1.

Step 403: The terminal device receives, based on the first resource configuration information, the first SIB sent by the network device.

After receiving the SSB, the terminal device obtains the first resource configuration information from the SSB.

In a possible implementation, because the first resource configuration information indicates the time domain position of the search space corresponding to the first scheduling information of the first SIB, the terminal device receives the first scheduling information based on the time domain position that is of the search space and that is indicated by the first resource configuration information, and the terminal device receives, based on the first scheduling information, the first SIB sent by the network device.

Step 404: The terminal device performs random access based on the first system information, to access the network device.

During implementation, the terminal device may send a random access preamble to the network device based on the first system information, to access the network device.

Step 405: The network device sends a second SIB.

Optionally, the second SIB includes second system information, and the second system information may be information used to perform mobility management for the terminal device.

The second SIB may be one of the plurality of different types of SIBs sent by the network device. Optionally, the second SIB may be a SIB other than the SIB1, and the second SIB and the first SIB may be SIBs of a same type or SIBs of different types.

Correspondingly, the terminal device receives the second SIB sent by the network device. Optionally, after receiving the second SIB, the terminal device may perform mobility management based on the second system information included in the second SIB.

In this embodiment of this application, after receiving the SSB, the terminal device may parse out the first resource configuration information from the SSB, and the terminal device may receive the first SIB based on the first resource configuration information, to obtain the information that is needed by the terminal device for random access and that is carried in the first SIB. In conventional technologies, the SSB carries only resource configuration information corresponding to scheduling information of the SIB 1. After receiving the SSB, the terminal device parses out, from the SSB, the resource configuration information corresponding to the scheduling information of the SIB1. After receiving the SIB1 based on the resource configuration information corresponding to the scheduling information of the SIB1, the terminal device parses out, from the SIB1, resource configuration information corresponding to scheduling information of another SIB (for example, the first resource configuration information corresponding to the first SIB). In the conventional technologies, the first resource configuration information is carried in the SIB1, in other words, the first resource configuration information is obtained through data parsing from the SIB1. Compared with the conventional technologies, in this embodiment of this application, the first resource configuration information is directly parsed out from the SSB, so that a delay in obtaining the first resource configuration information can be effectively reduced, and further, an access delay in a random access procedure can be reduced.

In addition, in this embodiment of this application, the first SIB received by the terminal device based on the first resource configuration information includes the first system information. The first system information is the information needed by the terminal device for random access, and information not needed for random access may not be carried in the first SIB. After completing random access, the terminal device receives the second SIB sent by the network device. The second SIB includes the second system information, and the second system information may be used to perform mobility management for the terminal device. For example, the second system information may include an ephemeris of a neighboring satellite. According to the communication method provided in this embodiment of this application, the network device includes, in the first SIB, the information related to random access of the terminal device, for example, an ephemeris of a current satellite. After the terminal device completes random access, the network device sends the second SIB to the terminal device, where the second SIB carries the information related to mobility management of the terminal. In this way, when the SIB is transmitted by using a single slot, the information related to random access of the terminal device and the information related to mobility management of the terminal are transmitted separately, so that complete transmission of the information can be ensured.

A communication procedure provided in this embodiment of this application includes the random access procedure of the terminal device (for example, step 401 to step 404 in the communication procedure shown in FIG. 4) and a management process after the terminal device completes random access (for example, step 405 in the communication procedure shown in FIG. 4). In the random access procedure of the terminal device, the terminal device completes random access based on the first system information sent by the network device, to access the network device. In the management process, the terminal device performs mobility management based on the second system information sent by the network device.

The following separately describes in detail the random access procedure of the terminal device and the management process after the terminal device completes random access.

### 1. Random access procedure of the terminal device

In the random access procedure of the terminal device, the terminal device receives the SSB sent by the network device, and the terminal device parses a PSS, an SSS, and a PBCH in the SSB to obtain an index of the SSB and the first resource configuration information.

In a possible implementation, the SSB further includes third resource configuration information. The third resource configuration information indicates a time domain position of a search space corresponding to second scheduling information of the SIB1, where the SIB1 may include cell information.

Optionally, the first system information may include ephemeris information of the network device (or may be referred to as ephemeris information of the current satellite), where the network device is the network device that sends the SSB.

Optionally, the first SIB may further include other information, where the other information includes but is not limited to ephemeris information of the neighboring satellite and extension information in the SIB1.

For example, the extension information in the SIB1 may be a load newly added in the SIB1 with future evolution. When the single-slot SIB1 cannot carry the load completely, the newly added load (extension information in the SIB1) may be carried in the first SIB.

It should be noted that, based on a quantity of information bits that can be transmitted by using the first SIB, in addition to the first system information, the first SIB may further include other information. For example, the first system information is the ephemeris information of the current satellite. It is assumed that ephemeris information of a single satellite is 196 bits. When the first SIB is transmitted by using a single slot, assuming that a quantity of information bits that can be transmitted in the single slot is 1350 bits, the first SIB may further carry other information. For example, the first SIB may further carry ephemeris information of five neighboring satellites, or the first SIB may further carry the extension information in the SIB1.

After receiving the SSB, the terminal device parses out the first resource configuration information and the third resource configuration information from the SSB. The first resource configuration information indicates the time domain position of the search space for the first scheduling information, and the first scheduling information is used to schedule the first SIB. The third resource configuration information indicates the time domain position of the search space for the second scheduling information, and the second scheduling information is used to schedule the SIB1.

The terminal device may receive, based on the first resource configuration information, the first scheduling information at the time domain position that is of the search space for the first scheduling information and that is indicated by the first resource configuration information; and the terminal device receives the first SIB based on scheduling of the first scheduling information.

The terminal device may receive, based on the third resource configuration information, the second scheduling information at the time domain position that is of the search space for the second scheduling information and that is indicated by the third resource configuration information; and the terminal device receives the SIB1 based on scheduling of the second scheduling information.

For example, the first scheduling information in this embodiment of this application may be a physical downlink control channel (physical downlink control channel, PDCCH), downlink control information (downlink control information, DCI), or the like. When the first scheduling information is a PDCCH, the first SIB is sent on a physical downlink shared channel (physical downlink shared channel, PDSCH) scheduled by using the PDCCH. The second scheduling information in this embodiment of this application may be a PDCCH, DCI, or the like. When the second scheduling information is a PDCCH, the SIB1 is sent on a PDSCH scheduled by using the PDCCH.

In this embodiment of this application, the network device may send a plurality of different types of SIBs in the random access procedure, for example, the first SIB, the SIB1, or another type of system information (which may also be referred to as OSI). To help the terminal device determine a type of a received SIB, the network device sends first target indication information, where the first target indication information includes type indication information indicating the SIB type of the SIB sent by the network device in the random access procedure.

Optionally, the first target indication information may be DCI.

In a possible implementation, when the network device sends the first SIB, the first target indication information sent by the network device is first indication information. The first indication information includes a first type indication parameter, and the first type indication parameter indicates a SIB type of the first SIB.

It should be noted that the network device may indicate the SIB type of the first SIB by using the first scheduling information corresponding to the first SIB. In this indication manner, the first indication information and the first scheduling information may be same information. Alternatively, the network device may indicate the SIB type of the first SIB by using the first indication information different from the first scheduling information corresponding to the first SIB. In this indication manner, the first indication information and the first scheduling information are different information.

In addition, when the network device sends the SIB1, the type indication parameter included in the first target indication information sent by the network device indicates a SIB type of the SIB1.

Correspondingly, the network device may indicate the SIB type of the SIB1 by using the second scheduling information corresponding to the SIB1. In this indication manner, the first target indication information and the second scheduling information may be same information. Alternatively, the network device may indicate the SIB type of the SIB1 by using third indication information different from the second scheduling information corresponding to the SIB1. In this indication manner, the third indication information and the second scheduling information are different information.

In addition, when the network device sends the OSI, the first target indication information sent by the network device may be fourth indication information. The fourth indication information may include a fourth type indication parameter, and the fourth type indication parameter indicates a SIB type of the OSI. The fourth indication information may be sent in a same manner as the SIB1 or the first SIB. Details are not described herein again.

In this embodiment of this application, the type indication parameter that is in the first target indication information and that indicates the SIB type occupies N bits, where N is an integer greater than 1.

For example, a value of N is 2. In this case, the first type indication parameter included in the first indication information, a third type indication parameter included in the third indication information, and the fourth type indication parameter included in the fourth indication information each may occupy two bits.

In a possible implementation, the network device indicates the SIB type by using DCI. In this case, the first indication information, the third indication information, and the fourth indication information may be DCI. The DCI includes a type indication parameter field. The type indication parameter field occupies two bits. The type of the SIB sent by the network device, for example, the SIB1, the first SIB, or the OSI is distinguished by using the two bits.

Optionally, the network device may send DCI 1_0 that is scrambled by using an SI-RNTI and that indicates a type indication parameter. The DCI 1_0 scrambled by using the system information radio network temporary identifier (system information radio network temporary identifier, SI-RNTI) includes a type indication parameter field occupying two bits.

For example, a correspondence between the type indication parameter field in the first target indication information and the SIB type shown in Table 1:

**Table 1**

| Type indication parameter field | SIB type |
|---|---|
| 00 | SIB1 |
| 01 | SI message |
| 10 | First SIB |
| 11 | Reserved |

The SIB type SI message corresponding to the type indication parameter "01" in Table 1 may also be referred to as an OSI message, and may be a SIB other than the SIB1 and the first SIB. The SIB type reserved corresponding to the type indication parameter "11" in Table 1 may be understood as that a corresponding SIB type is not defined for the type indication parameter "11" currently. As the 3GPP evolves in the future, the type indication parameter "11" may indicate another SIB type or may represent another meaning.

As shown in Table 1, when the type indication parameter included in the DCI 1_0 that is scrambled by using the SI-RNTI and that is sent by the network device is "10", the terminal device may determine that the type that is of the SIB sent by the network device and that corresponds to the DCI 1_0 scrambled by using the SI-RNTI is the first SIB. When the type indication parameter included in the DCI 1_0 that is scrambled by using the SI-RNTI and that is sent by the network device is "00", the terminal device may determine that the type that is of the SIB sent by the network device and that corresponds to the DCI 1_0 scrambled by using the SI-RNTI is the SIB1. When the type indication parameter included in the DCI 1_0 scrambled by using the SI-RNTI and sent by the network device is "01", the terminal device may determine that the type that is of the SIB sent by the network device and that corresponds to the DCI 1_0 scrambled by using the SI-RNTI is the OSI (or may be referred to as the SI message).

In addition, the correspondence between the type indication parameter field in the first target indication information and the SIB type may alternatively be shown in Table 2.

**Table 2**

| Type indication parameter field | SIB type |
|---|---|
| 00 | Reserved |
| 01 | SIB1 |
| 10 | First SIB |
| 11 | SI message |

The SIB type SI message corresponding to the type indication parameter "11" in Table 2 may also be referred to as an OSI message, and may be a SIB other than the SIB1 and the first SIB. The SIB type reserved corresponding to the type indication parameter "00" in Table 2 may be understood as that a corresponding SIB type is not defined for the type indication parameter "00" currently. As the 3GPP evolves in the future, the type indication parameter "00" may indicate another SIB type or may represent another meaning.

As shown in Table 2, when the type indication parameter included in the DCI 1_0 that is scrambled by using the SI-RNTI and that is sent by the network device is "10", the terminal device may determine that the type that is of the SIB sent by the network device and that corresponds to the DCI 1_0 scrambled by using the SI-RNTI is the first SIB. When the type indication parameter included in the DCI 1_0 that is scrambled by using the SI-RNTI and that is sent by the network device is "01", the terminal device may determine that the type that is of the SIB sent by the network device and that corresponds to the DCI 1_0 scrambled by using the SI-RNTI is the SIB1. When the type indication parameter included in the DCI 1_0 that is scrambled by using the SI-RNTI and that is sent by the network device is "11", the terminal device may determine that the type that is of the SIB sent by the network device and that corresponds to the DCI 1_0 scrambled by using the SI-RNTI is the OSI.

It should be noted that the correspondences between the type indication parameter field and the SIB type shown in Table 1 and Table 2 are merely examples. The correspondence between the type indication parameter field and the SIB type may be alternatively configured as another mapping relationship. This is not limited in this embodiment of this application.

In this embodiment of this application, the type indication parameter field is set to 2 bits, so that the SIB1, the first SIB1, and the OSI can be distinguished. When monitoring the DCI 1_0 scrambled by using the SI-RNTI, the terminal device determines, based on the type indication parameter field included in the DCI 1_0, that a scheduled PDSCH is the SIB1, the first SIB, or the OSI.

The terminal device may perform, based on the type indication parameter field in the DCI 1_0 scrambled by using the SI-RNTI, combination processing for same messages that are repeatedly transmitted. For example, when the network device repeatedly transmits a SIB1, if type indication parameter fields in a plurality of pieces of DCI 1_0 detected by the terminal device each indicate that a SIB type is the SIB1, the terminal device may combine a plurality of PDSCHs scheduled by using the plurality of pieces of DCI 1_0 including a same type indication parameter field, to obtain a combination gain and improve demodulation performance of the SIB1 (PDSCH). Alternatively, when the network device repeatedly transmits a first SIB, if type indication parameter fields in a plurality of pieces of DCI 1_0 detected by the terminal device each indicate that a SIB type is the first SIB, the terminal device may combine a plurality of PDSCHs scheduled by using the plurality of pieces of DCI 1_0 including a same type indication parameter field, to obtain a combination gain and improve demodulation performance of the first SIB. Alternatively, when the network device repeatedly transmits an SI message (or referred to as OSI), if type indication parameter fields in a plurality of pieces of DCI 1_0 detected by the terminal device each indicate that a SIB type is the SI message, the terminal device may combine a plurality of PDSCHs scheduled by using the plurality of pieces of DCI 1_0 including same type indication parameter fields, to obtain a combination gain and improve demodulation performance of the SI message.

In this embodiment of this application, after receiving the first SIB and the SIB1, the terminal device performs random access based on the first system information (the information needed by the terminal device for random access) included in the first SIB and the cell information carried in the SIB1, and the terminal device establishes a connection to the network device.

For example, the terminal device may determine, based on a configured time-frequency resource position for random access, a position for sending a physical random access channel (physical random access channel, PRACH), and the terminal device sends the random access preamble based on the position for sending the PRACH. In addition, the terminal device may predict satellite movement and perform time-frequency offset calculation and compensation based on the ephemeris information of the network device (the ephemeris information of the current satellite) included in the first system information, to accurately access the network device.

Optionally, after completing random access, the terminal device enters an RRC connected state, and the connection established with the network device may be a basic signaling connection.

2. The terminal device receives the second SIB sent by the network device.

After completing random access, the terminal device performs management based on the system information sent by the network device.

Optionally, the terminal device receives the second SIB sent by the network device. The second SIB may be a SIB other than the SIB1. For example, the second SIB may be any one of a SIB2, SIB3, SIB4, SIB5, SIB7, SIB11, SIB18 or SIB19, or the second SIB may be a SIB other than the SIB2, SIB3, SIB4, SIB5, SIB7, SIB11, SIB18 and SIB19. This is not limited in this embodiment of this application.

In the random access procedure of the terminal device, considering that information bits that can be transmitted by using the first SIB are limited, the first SIB carries the information needed by the terminal device for random access, and information needed by the terminal device after random access is completed may not be carried in the first SIB and the SIB1. For example, the first SIB does not carry the ephemeris information of the neighboring satellite, or the first SIB carries ephemeris information of a part of the neighboring satellites. After completing random access, the terminal device needs to perform mobility management based on the ephemeris information of the neighboring satellite.

In view of this problem, after the terminal device completes random access, the network device sends the second SIB, where the second SIB includes the second system information, and the second system information is the information used to perform mobility management for the terminal device.

Optionally, the second system information may include ephemeris information of a part or all of neighboring satellites corresponding to the network device.

It should be noted that, if the first system information includes the ephemeris information of the network device, the second system information may include the ephemeris information of all of the neighboring satellites. If the first system information includes the ephemeris information of the network device and the ephemeris information of the part of the neighboring satellites, the second system information may include ephemeris information of the other part of the neighboring satellites of the network device.

In a possible implementation, the network device sends an RRC reconfiguration message, where the RRC reconfiguration message includes second resource configuration information; and the terminal device receives, based on the second resource configuration information, the second SIB sent by the network device.

The second resource configuration information indicates a time domain position of a search space corresponding to third scheduling information of the second SIB.

After receiving the second resource configuration information, the terminal device may receive the third scheduling information based on the time domain position that is of the search space corresponding to the third scheduling information and that is indicated by the second resource configuration information; and the terminal device receives the second SIB based on scheduling of the third scheduling information.

For example, the third scheduling information in this embodiment of this application may be a PDCCH, DCI, or the like. When the third scheduling information is a PDCCH, the second SIB is sent on a PDSCH scheduled by using the PDCCH.

After receiving the second SIB, the terminal device parses the second system information included in the second SIB; and the terminal device performs mobility management based on the second system information.

Mobility management of the terminal device in this embodiment of this application may be handover between network devices, or may be referred to as inter-satellite handover.

In this embodiment of this application, the network device may send a plurality of different types of SIBs, for example, the SIB1, the first SIB, or the OSI (or referred to as the SI message). In this embodiment of this application, the second SIB may be OSI. After the terminal device performs random access and successfully accesses the network device, the network device sends second target indication information when sending the second SIB. The second target indication information includes type indication information, indicating a SIB type of a SIB sent by the network device in the random access procedure.

Optionally, the second target indication information may be DCI.

In a possible implementation, when the network device sends the second SIB, the second target indication information sent by the network device is second indication information. The second indication information includes a second type indication parameter, and the second type indication parameter indicates a SIB type of the second SIB.

It should be noted that the network device may indicate the SIB type of the second SIB by using the third scheduling information corresponding to the second SIB. In this indication manner, the second indication information and the third scheduling information may be same information. Alternatively, the network device may indicate the SIB type of the second SIB by using the second indication information different from the third scheduling information corresponding to the second SIB. In this indication manner, the second indication information and the third scheduling information are different information.

In this embodiment of this application, the type indication parameter that is in the second target indication information and that indicates the SIB type may occupy M bits, and M is an integer greater than 1.

For example, a value of M is 2. In this case, the second type indication parameter included in the second indication information may occupy two bits.

In a possible implementation, the network device indicates the SIB type by using DCI. In this case, the second indication information may be DCI. The DCI includes a type indication parameter field. The type indication parameter field occupies two bits. The type of the SIB sent by the network device, for example, the SIB1, the first SIB, or the OSI is distinguished by using the two bits. The second SIB is OSI.

Optionally, the network device may send DCI 1_0 that is scrambled by using an SI-RNTI and that indicates a type indication parameter. The DCI 1_0 scrambled by using the SI-RNTI includes the type indication parameter field occupying two bits. For example, a correspondence between the type indication parameter field and the SIB type in the second target indication information sent by the network device may be shown in Table 1 or Table 2. For example, as shown in Table 1, when the type indication parameter field included in the second target indication information received by the terminal device is "01", the terminal device may determine that the type of the received SIB is the OSI, for example, may be the second SIB.

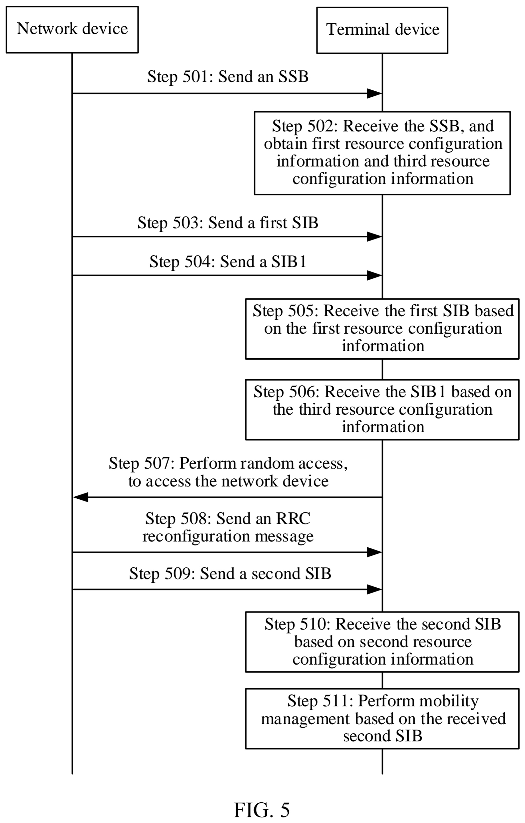

The following describes, with reference to a specific embodiment, the communication method provided embodiments of this application. As shown in FIG. 5, the method may specifically include the following steps.

Step 501: A network device sends an SSB.

Step 502: The terminal device receives the SSB, and obtains first resource configuration information and third resource configuration information.

The SSB includes the first resource configuration information and second resource configuration information. The first resource configuration information indicates a time domain position of a search space corresponding to first scheduling information of a first SIB, and the third resource configuration information indicates a time domain position of a search space corresponding to second scheduling information of a SIB1.

Step 503: The network device sends the first SIB.

Step 504: The network device sends the SIB1.

It should be noted that a sending sequence of the first SIB and the SIB1 is not limited in this embodiment of this application. The network device may first send the first SIB and then send the SIB1, or may first send the SIB1 and then send the first SIB, or sends the first SIB and the SIB1 at the same time.

Optionally, in a random access procedure, the network device may periodically send the first SIB and the SIB1, and sending periodicities of the first SIB and the SIB1 may be the same or may be different. Therefore, in this embodiment of this application, the first SIB and the SIB 1 are not sent only after step 502. The network device may alternatively send the first SIB and the SIB1 before the terminal device performs step 502. However, the terminal device needs to receive the first SIB based on the first resource configuration information obtained in step 502, and receive the SIB1 based on the third resource configuration information obtained in step 502. Therefore, FIG. 5 shows only that the network device sends the first SIB and the SIB1 after step 502.

Step 505: The terminal device receives the first SIB based on the first resource configuration information.

The terminal device receives the first scheduling information at the time domain position indicated by the first resource configuration information, and receives the first SIB based on scheduling of the first scheduling information.

For example, the first SIB includes first system information, and the first system information may be ephemeris information of the network device, to be specific, ephemeris information of the network device that sends the first SIB, or referred to as ephemeris information of a current satellite.

Step 506: The terminal device receives the SIB1 based on the third resource configuration information.

The terminal device receives the second scheduling information at the time domain position indicated by the third resource configuration information, and receives the SIB1 based on scheduling of the second scheduling information.

For example, the SIB1 includes cell information.

Step 507: The terminal device performs random access, to access the network device.

During implementation, the terminal device may access the corresponding network device based on the ephemeris information that is of the current satellite and that is carried in the first SIB and the cell information carried in the SIB1.

Step 508: The network device sends an RRC reconfiguration message.

The RRC reconfiguration message includes second resource configuration information. The second resource configuration information indicates a time domain position of a search space corresponding to third scheduling information of a second SIB.

Step 509: The network device sends the second SIB.

The second SIB includes second system information, and the second system information may include ephemeris information of a part or all of neighboring satellites corresponding to the network device. Optionally, if the first SIB sent by the network device in step 503 does not include the ephemeris information of the neighboring satellite, the second system information includes ephemeris information of all of the neighboring satellites.

Step 510: The terminal device receives the second SIB based on the second resource configuration information.

During implementation, the terminal device may receive the third scheduling information based on the time domain position indicated by the second resource configuration information, and receive the second SIB based on scheduling of the third scheduling information.

Step 511: The terminal device performs mobility management based on the received second SIB.

It may be understood that, in the foregoing embodiments, the terminal and/or the network device may perform some or all of the steps in embodiments. These steps or operations are merely examples. Other operations or variations of various operations may be further performed in embodiments of this application. In addition, the steps may be performed in a sequence different from a sequence shown in embodiments, and not all of operations in embodiments of this application may be performed. In addition, sequence numbers of the steps do not mean an execution sequence. An execution sequence of the processes should be determined based on functions and internal logic of the processes, and should not constitute any limitation on the implementation processes of embodiments of this application.

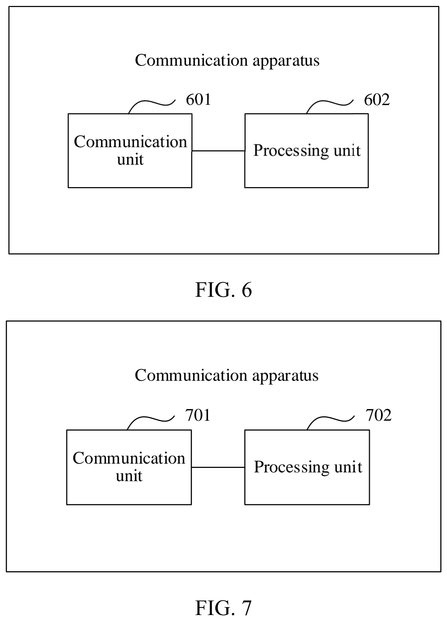

Based on a same inventive concept as the method embodiments, an embodiment of this application provides a communication apparatus. A structure of the communication apparatus may be shown in FIG. 6. The communication apparatus includes a communication unit 601 and a processing unit 602. In an implementation, the communication apparatus may be specifically configured to implement a method performed by a terminal. The apparatus may be the terminal, or may be a chip or a chip set in the terminal or a part that is of the chip and that is configured to perform a related method function. The communication unit 601 is configured to: receive an SSB sent by a network device, where the SSB includes first resource configuration information; and receive a second SIB sent by the network device, where the second SIB includes second system information, and the second system information is information used to perform mobility management for the terminal device. The processing unit 602 is configured to: receive, based on the first resource configuration information, a first system information block SIB sent by the network device, where the first SIB includes first system information, and the first system information is information needed by the terminal device for random access; perform random access based on the first system information, to access the network device; and perform mobility management based on the second system information.

In a possible design, the communication unit 601 is configured to: receive an RRC reconfiguration message sent by the network device, where the RRC reconfiguration message includes second resource configuration information; and receive, based on the second resource configuration information, the second SIB sent by the network device.

In a possible design, the communication unit 601 is configured to receive first indication information. The first indication information includes a first type indication parameter, and the first type indication parameter indicates a SIB type of the first SIB.

In a possible design, the communication unit 601 is configured to receive second indication information. The second indication information includes a second type indication parameter, and the second type indication parameter indicates a SIB type of the second SIB.

In a possible design, the first type indication parameter occupies N bits, and N is an integer greater than 1.

In a possible design, the second type indication parameter occupies M bits, and M is an integer greater than 1.

In a possible design, the first system information includes ephemeris information of the network device.

In a possible design, the second system information includes ephemeris information of a part or all of neighboring satellites corresponding to the network device.

Based on a same inventive concept as the method embodiments, an embodiment of this application further provides a communication apparatus. A structure of the communication apparatus may be shown in FIG. 7. The communication apparatus includes a communication unit 701 and a processing unit 702. In an implementation, the communication apparatus may be specifically configured to implement a method performed by a network device. The apparatus may be the network device, may be a chip or a chip set in the network device, or a part of the chip that is configured to perform a related method function. The communication unit 701 is configured to: send a synchronization signal/physical broadcast channel block SSB, where the SSB includes first resource configuration information, and the first resource configuration information indicates a resource position used to schedule a first system information block SIB; send the first SIB, where the first SIB includes first system information, and the first system information is information needed by a terminal device for random access; and send a second SIB to the accessed terminal device, where the second SIB includes second system information, and the second system information is information used to perform mobility management for the terminal device. The processing unit 702 is configured to process received and/or sent data (or information).

In a possible design, the communication unit 701 is configured to send an RRC reconfiguration message to the accessed terminal device. The RRC reconfiguration message includes second resource configuration information, and the second resource configuration information indicates a resource position used to schedule the second SIB.

In a possible design, the communication unit 701 is configured to send first indication information. The first indication information includes a first type indication parameter, and the first type indication parameter indicates a SIB type of the first SIB.

In a possible design, the communication unit 701 is configured to send second indication information. The second indication information includes a second type indication parameter, and the second type indication parameter indicates a SIB type of the second SIB.

In a possible design, the first type indication parameter occupies N bits, and N is an integer greater than 1.

In a possible design, the second type indication parameter occupies M bits, and M is an integer greater than 1.

In a possible design, the first system information includes ephemeris information of the network device.

In a possible design, the second system information includes ephemeris information of a part or all of neighboring satellites corresponding to the network device.

In embodiments of this application, division into the units is an example, is merely logical function division, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of software functional module. It may be understood that, for functions or implementations of the units in embodiments of this application, further refer to the related descriptions in the method embodiments.

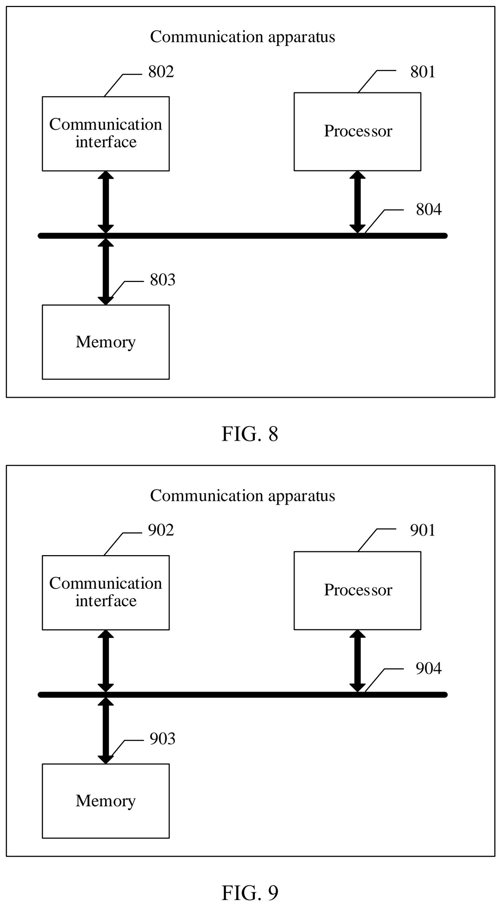

In a possible manner, the communication apparatus may be shown in FIG. 8. The apparatus may be a communication device or a chip in the communication device. The communication device may be the terminal device in the foregoing embodiments. The apparatus includes a processor 801 and a communication interface 802, and may further include a memory 803.

The processor 801 may be a CPU, a digital processing unit, or the like. The communication interface 802 may be a transceiver, an interface circuit like a transceiver circuit, a transceiver chip, or the like. The apparatus further includes the memory 803, configured to store a program executed by the processor 801. The memory 803 may be a nonvolatile memory like a hard disk drive (hard disk drive, HDD) or a solid-state drive (solid-state drive, SSD), or may be a volatile memory (volatile memory) like a random access memory (random access memory, RAM). The memory 803 is any other medium that can be configured to carry or store expected program code in a form of instructions or a data structure and that can be accessed by a computer, but is not limited thereto.

The processor 801 is configured to execute the program code stored in the memory 803, and is specifically configured to perform an action of the processing unit 602. The communication interface 802 is specifically configured to perform an action of the communication unit 601. Details are not described herein again in this application.

A specific connection medium between the communication interface 802, the processor 801, and the memory 803 is not limited in embodiments of this application. In embodiments of this application, the memory 803, the processor 801, and the communication interface 802 are connected through a bus 804 in FIG. 8. The bus is represented by using a bold line in FIG. 8. A connection manner between other components is merely an example for description, and is not limited thereto. Buses may be classified into an address bus, a data bus, a control bus, and the like. For ease of representation, only one bold line is used to represent the bus in FIG. 8, but this does not mean that there is only one bus or only one type of bus.

In a possible manner, the communication apparatus may be shown in FIG. 9. The apparatus may be a communication device or a chip in the communication device. The communication device may be the network device in the foregoing embodiments. The apparatus includes a processor 901 and a communication interface 902, and may further include a memory 903.

The processor 901 may be a CPU, a digital processing unit, or the like. The communication interface 902 may be a transceiver, an interface circuit like a transceiver circuit, a transceiver chip, or the like. The apparatus further includes the memory 903, configured to store a program executed by the processor 901. The memory 903 may be a nonvolatile memory like an HDD or an SSD, or may be a volatile memory like a RAM. The memory 903 is any other medium that can be configured to carry or store expected program code in a form of instructions or a data structure and that can be accessed by a computer, but is not limited thereto.

The processor 901 is configured to execute the program code stored in the memory 903, and is specifically configured to perform an action of the processing unit 702. The communication interface 902 is specifically configured to perform an action of the communication unit 701. Details are not described herein again in this application.

A specific connection medium between the communication interface 902, the processor 901, and the memory 903 is not limited in embodiments of this application. In embodiments of this application, the memory 903, the processor 901, and the communication interface 902 are connected through a bus 904 in FIG. 9. The bus is represented by using a bold line in FIG. 9. A connection manner between other components is merely an example for description, and is not limited thereto. Buses may be classified into an address bus, a data bus, a control bus, and the like. For ease of representation, only one bold line is used to represent the bus in FIG. 9, but this does not mean that there is only one bus or only one type of bus.

An embodiment of this application further provides a communication method, including the steps performed by the terminal device in the embodiment in FIG. 4 or FIG. 5.

An embodiment of this application further provides a communication method, including the steps performed by the network device in the embodiment in FIG. 4 or FIG. 5.

An embodiment of this application further provides a communication system, including a communication apparatus configured to implement a function of the terminal device in the embodiment in FIG. 4 or FIG. 5 and a communication apparatus configured to implement a function of the network device in the embodiment in FIG. 4 or FIG. 5.

An embodiment of this application further provides a computer-readable storage medium, configured to store computer software instructions that need to be executed by the processor. The computer software instructions include a program that needs to be executed by the processor.

An embodiment of this application further provides a computer program product, including a computer program that needs to be executed by the processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A communication method, wherein the method comprises:
receiving a synchronization signal/physical broadcast channel block SSB sent by a network device, wherein the SSB comprises first resource configuration information;
receiving, based on the first resource configuration information, a first system information block SIB sent by the network device, wherein the first SIB comprises first system information, and the first system information is information needed by a terminal device for random access;
performing random access based on the first system information, to access the network device; and
receiving a second SIB sent by the network device, wherein the second SIB comprises second system information, and the second system information is information used to perform mobility management for the terminal device.

2. The method according to claim 1, wherein the receiving the second SIB sent by the network device comprises:
receiving a radio resource control RRC reconfiguration message sent by the network device, wherein the RRC reconfiguration message comprises second resource configuration information; and
receiving, based on the second resource configuration information, the second SIB sent by the network device.

3. The method according to claim 1, wherein the method further comprises:
receiving first indication information, wherein the first indication information comprises a first type indication parameter, and the first type indication parameter indicates a SIB type of the first SIB.

4. The method according to claim 2, wherein the method further comprises:
receiving second indication information, wherein the second indication information comprises a second type indication parameter, and the second type indication parameter indicates a SIB type of the second SIB.

5. The method according to claim 3, wherein the first type indication parameter occupies N bits, and N is an integer greater than 1.

6. The method according to claim 4, wherein the second type indication parameter occupies M bits, and M is an integer greater than 1.

7. The method according to any one of claims 1 to 6, wherein the first system information comprises ephemeris information of the network device.

8. The method according to any one of claims 1 to 7, wherein the second system information comprises ephemeris information of a part or all of neighboring satellites corresponding to the network device.

9. A communication method, wherein the method comprises:
sending a synchronization signal/physical broadcast channel block SSB, wherein the SSB comprises first resource configuration information, and the first resource configuration information indicates a resource position used to schedule a first system information block SIB;
sending the first SIB, wherein the first SIB comprises first system information, and the first system information is information needed by a terminal device for random access; and
sending a second SIB to the accessed terminal device, wherein the second SIB comprises second system information, and the second system information is information used to perform mobility management for the terminal device.

10. The method according to claim 9, wherein the method further comprises:
sending a radio resource control RRC reconfiguration message to the accessed terminal device, wherein the RRC reconfiguration message comprises second resource configuration information, and the second resource configuration information indicates a resource position used to schedule the second SIB.

11. The method according to claim 9, wherein the method further comprises:
sending first indication information, wherein the first indication information comprises a first type indication parameter, and the first type indication parameter indicates a SIB type of the first SIB.

12. The method according to claim 10, wherein the method further comprises:
sending second indication information, wherein the second indication information comprises a second type indication parameter, and the second type indication parameter indicates a SIB type of the second SIB.

13. The method according to claim 11, wherein the first type indication parameter occupies N bits, and N is an integer greater than 1.

14. The method according to claim 12, wherein the second type indication parameter occupies M bits, and M is an integer greater than 1.

15. The method according to any one of claims 9 to 14, wherein the first system information comprises ephemeris information of the network device.

16. The method according to any one of claims 9 to 15, wherein the second system information comprises ephemeris information of a part or all of neighboring satellites corresponding to the network device.

17. A communication apparatus, comprising a module configured to perform the method according to any one of claims 1 to 8, or a module configured to perform the method according to any one of claims 9 to 16.

18. A communication apparatus, comprising a processor and a memory, wherein
the processor is configured to execute a computer program or instructions stored in the memory, to cause the communication apparatus to implement the method according to any one of claims 1 to 8, or implement the method according to any one of claims 9 to 16.

19. A computer-readable storage medium, storing a computer program or instructions, wherein when the computer program or the instructions are run on a computer, the computer-readable storage medium is caused to implement the method according to any one of claims 1 to 8, or implement the method according to any one of claims 9 to 16.

20. A computer program product, comprising a computer program, wherein when the computer program is executed by a communication apparatus, the method according to any one of claims 1 to 8 is implemented, or the method according to any one of claims 9 to 16 is implemented.

21. A communication system, comprising a terminal device configured to perform the method according to any one of claims 1 to 8 and a network device configured to perform the method according to any one of claims 9 to 16.

22. A chip system, comprising a processor, wherein the processor is configured to perform the method according to any one of claims 1 to 8, or perform the method according to any one of claims 9 to 16.
